# EUROPÄISCHE PATENTANMELDUNG

(11) **EP 1 702 829 A2**
(43) Veröffentlichungstag der Anmeldung: **20.09.2006**
(21) Anmeldenummer: 06100595.5
(22) Anmeldetag: 19.01.2006
(51) Int. Cl.: B62D 5/00, B61D 17/22

(54) **Vorrichtung zum Anbinden eines Faltenbalgs an ein Fahrzeugglied**

(30) Priorität: 15.03.2005 AT 1562005 U
(71) Anmelder: Ultimate Transportation Equipment GmbH, 3300 Amstetten (AT)
(72) Erfinder: Teufl, Manfred, 3332 Rosenau (AT)
(74) Vertreter: Henhapel, Bernhard

(57) **Zusammenfassung**

Vorrichtung zur Befestigung eines Faltenbalgs (3) an einem Fahrzeugglied (1), insbesondere dem eines Schienenfahrzeugs, wobei ein Endabschnitt (5) des Faltenbalgs (3) an einem vorzugsweise in Balgumfangsrichtung verlaufenden, am Fahrzeugglied (1) angeordneten Befestigungsrahmen (4) in einer Aufnahme (9) gehalten ist, an welcher ein Haltemittel angreift und den Endabschnitt (5) des Faltenbalgs (3) in der Aufnahme hält. Um den vom Faltbalg (3) geschützten Raum gegen den Zutritt von Schmutz und Witterungseinflüssen rundum zu schützen und um bei der Gestaltung des Befestigungsrahmenumlaufs auch beliebige konkave und konvexe Formen zu ermöglichen, wurden mindestens zwei Druckelemente (7) vorgesehen, welche durch Spannmittel (6) in eine Aufnahme (9) des Befestigungsrahmens (4) drückbar sind.

## Beschreibung

Die Erfindung bezieht sich auf eine Vorrichtung zur Befestigung eines Faltenbalgs an einem Fahrzeugglied, vorzugsweise an der Stirnfläche des Fahrzeugglieds, insbesondere eines Schienenfahrzeugs, wobei ein Endabschnitt des Faltenbalgs an einem vorzugsweise in Faltenbalgumfangsrichtung verlaufenden, am Fahrzeugglied angeordneten Befestigungsrahmen in einer Aufnahme gehalten ist, an welcher ein Haltemittel angreift und den Endabschnitt des Faltenbalges in der Aufnahme hält gemäß dem Oberbegriff des Anspruchs 1.

Derartige Faltenbälge kommen an den einander zugekehrten Enden zweier gelenkig miteinander verbundener Fahrzeugglieder zum Einsatz, um einen tunnelförmigen Durchgangsraum zwischen den Fahrzeuggliedern zu schaffen, welcher durchgehende Personen beim Passieren einer Übergangsbrücke vor Witterungseinflüssen und Fahrtwind schützt.

Üblicherweise wird zur Fixierung des Faltenbalges an der Fahrzeugwand ein rinnenförmiger Befestigungsrahmen vorgesehen, in welchem neben einem Dichtprofil ein in den Faltenbalg eingenähtes Spannkabel seinen Platz findet. Mittels eines Kupplungsstückes an den beiden Enden des Spannkabels wird dann der Faltenbalg am Fahrzeugglied befestigt bzw. von diesem gelöst.

Bereits in der EP 0 114 913 A1 wird eine solche Spannvorrichtung offenbart. Hier wird zur Verbindung der beiden Spannkabelenden ein an einer Grundplatte drehbar gelagertes Kniehebelpaar eingesetzt, durch deren Schwenken der Abstand zwischen beiden Seilenden veränderbar ist. Indem der Umfang des Spannseiles mittels der Kniehebel verkleinert wird, fügt sich jenes unter Spannung in eine Rinne am Befestigungsrahmen und hält so den Faltenbalg in seiner Position an der Fahrzeugwand.

Die genannte Vorrichtung weist dabei jedoch den Nachteil auf, dass die bezeichnete Rinne im Bereich der als Spannschloss dienenden Kniehebel unterbrochen werden muss. Somit dichtet die Verbindung zwischen Faltenbalg und Fahrzeugwand den geschützten Raum nicht mehr ab und erlaubt Elementen der Umwelt wie Wasser, Wind, Staub, Kälte und Lärm den Zutritt ins Innere des Fahrzeugs. Ein unterbrochener Faltenbalg entspricht somit nicht dem Idealbild einer den Durchgangsraum rundherum schützenden Umhüllung. Weiters muss als Nachteil angeführt werden, dass aufgrund des großen Anpressdrucks, welcher zum sicheren Anfügen des Faltenbalgs zwischen Spannkabel und Rinne erforderlich ist, die Rinne an ihrem gesamten Umfang etwas nach außen (relativ zum Durchgangsraum) gewölbt sein muss. Dies bedeutet, dass bei einer Spannvorrichtung unter Zuhilfenahme eines Spannseils keine nach innen, also zu einer gedachten Achse des vom Faltbalg gebildeten Durchgangsraumes gewölbten Rinnenumfangskonturen realisiert werden können.

Der vorliegenden Erfindung liegt daher die Aufgabe zugrunde, diese Nachteile zu vermeiden, und eine Vorrichtung zur Befestigung eines Faltenbalges an einem Fahrzeugglied zu schaffen, durch welche bei gleichzeitiger einfacher Bedienbarkeit eine in Umfangsrichtung des Faltenbalgendes rundherum dichte Verbindung zur Fahrzeugwand gewährleistet wird. Es ist eine weitere Aufgabe der vorliegenden Erfindung durch eine möglichst gleichmäßige Spannungsverteilung am bezeichneten Verbindungsbereich die Gestaltung von Rinnenumfangskonturen zu ermöglichen, welche in ihrem Verlauf auch eine "negative", das heißt in eine gedachte zentripetale, zum Befestigungsrahmenmittelpunkt weisende Richtung aufweisen können.

Diese Aufgabe wird durch eine Vorrichtung mit den kennzeichnenden Merkmalen des Anspruchs 1 erreicht.

Durch die vorgeschlagenen Maßnahmen unter Anordnung eines Befestigungsrahmens vorzugsweise an der Stirnfläche des Fahrzeuggliedes, an welchem mindestens zwei Druckelemente und Spannmittel montiert sind, kann ein unterbrechungsfrei umlaufender Befestigungsrahmen gewährleistet werden, der auch "negative" Umfangskrümmungen im oben beschriebenen Sinne zulässt. Dabei sind die Druckelemente in unterschiedlichen Abschnitten der Aufnahme angeordnet und werden über Spannmittel in die Aufnahme gedrückt. Sie können aus einer Richtung in den Befestigungsrahmen gedrückt werden, die einen geschlossenen Umfang des Befestigungsrahmens erlaubt.

Nach den kennzeichnenden Merkmalen des Anspruchs 2 ist das Druckelement als länglicher Formkörper ausgestaltet, dessen Längskontur zumindest einem Abschnitt der Umfangskontur des Befestigungsrahmens (4) entspricht. Damit wird eine möglichst gleichmäßige Spannkraftverteilung über den Umfang des Befestigungsrahmens erreicht. Durch die Übereinstimmung von Befestigungsrahmen (und damit der Aufnahme) und der Druckelemente was deren Umfangskontur betrifft, ist garantiert, dass die Druckelemente einen gleichmäßig verteilten Druck auf den Endabschnitt des Faltenbalges in der Aufnahme ausüben. Die Länge der Druckelemente kann dabei beliebig gewählt werden. Je kürzer die Druckelemente sind, desto mehr müssen zum Einsatz kommen, um den gesamten Umfang des Befestigungsrahmen abzudecken.

Entsprechend den kennzeichnenden Merkmalen des Anspruchs 3 weist dabei der Befestigungsrahmen einen Abschnitt auf, der parallel zur Stirnfläche des Fahrzeugglieds an derselben verlaufend befestigt ist und einen Abschnitt, der in Richtung des Faltenbalgs absteht und die Aufnahme für den Endabschnitt des Faltenbalgs bildet. Der Befestigungsrahmen besitzt hierbei einen unterbrechungsfrei umlaufenden Umfangsverlauf.

Gemäß den kennzeichnenden Merkmalen des Anspruchs 4 weist jedes Druckelement eine Anpressfläche zum Anpressen des Endabschnittes des Faltenbalgs in die Aufnahme auf, deren Erstreckung in Umfangsrichtung der Aufnahme identisch ist mit jener der Aufnahme. Somit verläuft die Anpressfläche im wesentlichen kongruent zur Umfangskontur des Befestigungsrahmens im jeweiligen Abschnitt. Durch die Kombination von mehreren Druckelementen, die jedoch jeweils die Umfangskontur des Befestigungsrahmens am Fahrzeugglied in jenem Abschnitt des Befestigungsrahmen aufweisen, in welchem sie angeordnet sind, ist gewährleistet, dass der Faltenbalgendabschnitt über die gesamte Umfangskontur optimal in die Aufnahme des Befestigungsrahmens gedrückt wird und der Faltenbalg daher gegenüber der Umwelt vollkommen abgedichtet ist.

Den kennzeichnenden Merkmalen des Anspruchs 5 zufolge verläuft die Bewegungsrichtung der Druckelemente parallel zur Stirnfläche des Fahrzeuggliedes in einer Ebene im wesentlichen normal zur Achse des vom Faltenbalg umgrenzten Raumes, um einen günstigen Krafteingriff des Spannhebels zu ermöglichen.

Gemäß den kennzeichnenden Merkmalen des Anspruchs 6 werden zum Spannen der Druckelemente Spannhebel vorgesehen. Mittels solcher kann ein rascher und effizienter Spannvorgang zur Befestigung des Faltenbalgs durchgeführt werden.

Gemäß den kennzeichnenden Merkmalen des Anspruchs 7 weist der Befestigungsrahmen ein J-förmiges Querschnittsprofil auf. Dadurch ist eine sichere Aufnahme für den Faltenbalgendabschnitt gebildet und gleichzeitig ein geeignetes Widerlager für die mittels Spannhebel in die Aufnahme drückenden Druckelemente.

Gemäß den kennzeichnenden Merkmalen des Anspruchs 8 ist der Endabschnitt des Faltenbalgs mit einem umlaufenden Klemmwulst ausgestattet. Damit soll ein möglichst formschlüssiges Anfügen des Faltbalgendes an den Befestigungsrahmen erzielt werden, sowie ein sicheres Klemmen mittels der Druckelemente.

Gemäß den kennzeichnenden Merkmalen des Anspruchs 9 ist zwischen dem Befestigungsrahmen und der Fahrzeugstirnwand eine Dichtmasse oder ein Dichtprofil eingefügt ist, um ein Scheuern zwischen metallischen Flächen zu verhindern und Dichtheit gegenüber eindringendem Wasser zu erzielen.

Gemäß den kennzeichnenden Merkmalen des Anspruchs 10 ist der Spannhebel an zwei am Befestigungsrahmen angebrachten Lagerböcken mittels einer Spannhebelschraube drehbar gelagert, um ein profundes Eingreifen der Hebelwirkung zu gewährleisten.

Die kennzeichnenden Merkmale des Anspruchs 11, demnach der Befestigungsrahmen auf seiner zur Stirnfläche des Fahrzeuggliedes gerichteten Seite Senkungen aufweist, ermöglichen die Aufnahme von Befestigungsschrauben oder Nieten, wodurch weitere Befestigungslaschen nicht erforderlich sind. Gleichzeitig behindern die versenkten Schrauben- oder Nietenköpfe nicht das Gleiten der Hebelmechanik an der Innenseite des Befestigungsrahmenprofils.

Gemäß den kennzeichnenden Merkmalen des Anspruchs 12 ist der Spannhebel U-förmig ausgebildet. Durch solcherarte Ausführung des Spannhebels mit zwei Schenkeln soll ein optimierter und zweckmäßiger Kraftangriff am Befestigungsrahmen erzielt werden.

Eine besondere Ausführungsart des Spannhebels beschreiben die kennzeichnenden Merkmale des Anspruchs 13, wonach der Spannhebel als einarmiger Hebel ausgeführt ist, welcher im Bereich seines Drehlagers mit einem Ansatzelement versehen ist, an welchem ein entsprechendes Werkzeug zur Betätigung des Spannhebels ansetzbar ist. Das Ansatzelement kann beliebig profiliert sein, besitzt jedoch vorzugsweise die Form eines Sechskantschafts, sodass der Spannhebel mittels handelsüblichen Werkzeugen leicht betätigt werden kann. Die Ausführung des Spannhebels als einarmiger Hebel ermöglicht weiters eine platzsparende und kompakte Bauweise der Befestigungsvorrichtung.

Die Merkmale der Ansprüche 14 und 15 beschreiben bevorzugte Profilquerschnitte der Druckelemente.

Die Erfindung wird nun anhand eines Ausführungsbeispiels näher erläutert. Dabei zeigt:
- Fig.1: eine schematische Darstellung Faltenbalg-efestigungsrahmen-Fahrzeugglied
- Fig.2: eine Schnittdarstellung des Befestigungsrahmens entlang Linie XX aus Fig.2a bei gelöster Position des Druckelementes
- Fig.2a: eine Seitenansicht des Spannhebels in lösender Position
- Fig.3: eine Schnittdarstellung des Befestigungsrahmens entlang Linie XX aus Fig.3a bei fixierter Position des Druckelementes
- Fig.3a: eine Seitenansicht des Spannhebels in fixierender Position
- Fig.4: eine Detailansicht eines Druckelementes
- Fig.5: eine Ansicht einer Umfangskontur des Befestigungsrahmens
- Fig.6: eine Seitenansicht eines Umfangsabschnittes des Befestigungsrahmens
- Fig.6a: eine Schnittdarstellung entlang der Linie YY aus Fig.6
- Fig.6b: eine Schnittdarstellung entlang der Linie XX aus Fig.6
- Fig.7: eine Schnittdarstellung des Befestigungsrahmens entlang Linie AA aus Fig.7a bei gelöster Position des Druckelementes
- Fig.7a: eine Seitenansicht des Spannhebels in lösender Position
- Fig.8: eine Schnittdarstellung des Befestigungsrahmens entlang Linie AA aus Fig.8a bei fixierter Position des Druckelementes
- Fig.8a: eine Seitenansicht des Spannhebels in fixierender Position

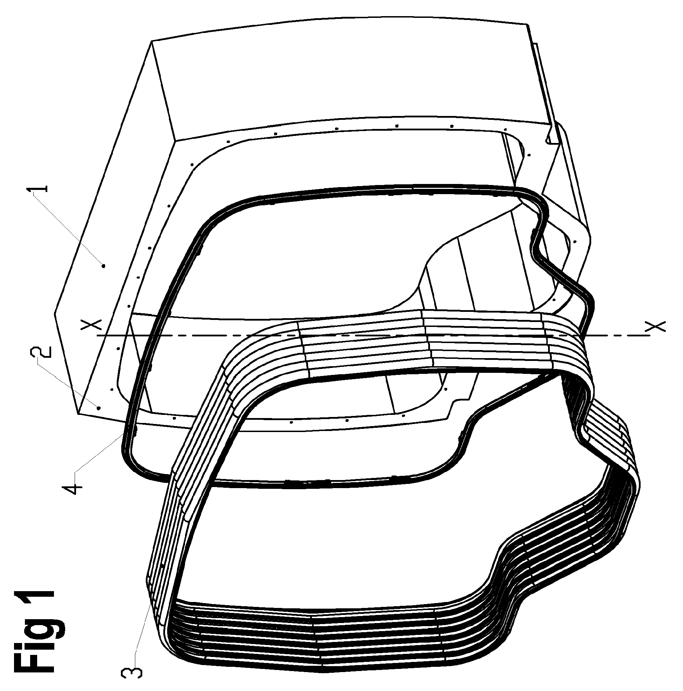

In Fig.1 wird ein Faltenbalg 3 dargestellt, wie er einem an der Stirnfläche 2 eines Fahrzeuggliedes 1 angebrachten Befestigungsrahmen 4 zugeordnet ist. Der Befestigungsrahmen 4 wird dabei vorzugsweise mittels in seinem Profil versenkter Befestigungsschrauben oder Senkkopfnieten an der Stirnfläche 2 des Fahrzeuggliedes 1 angebracht.

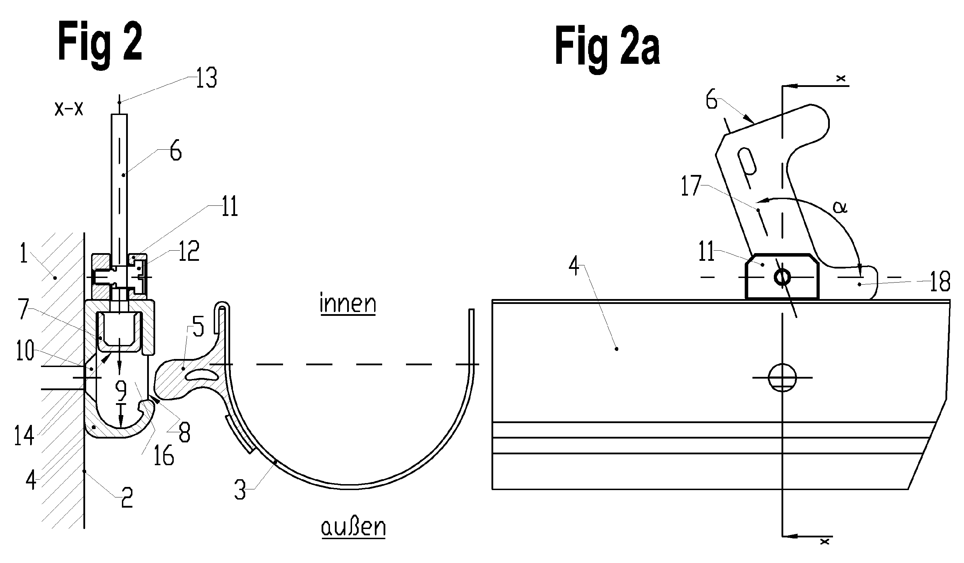

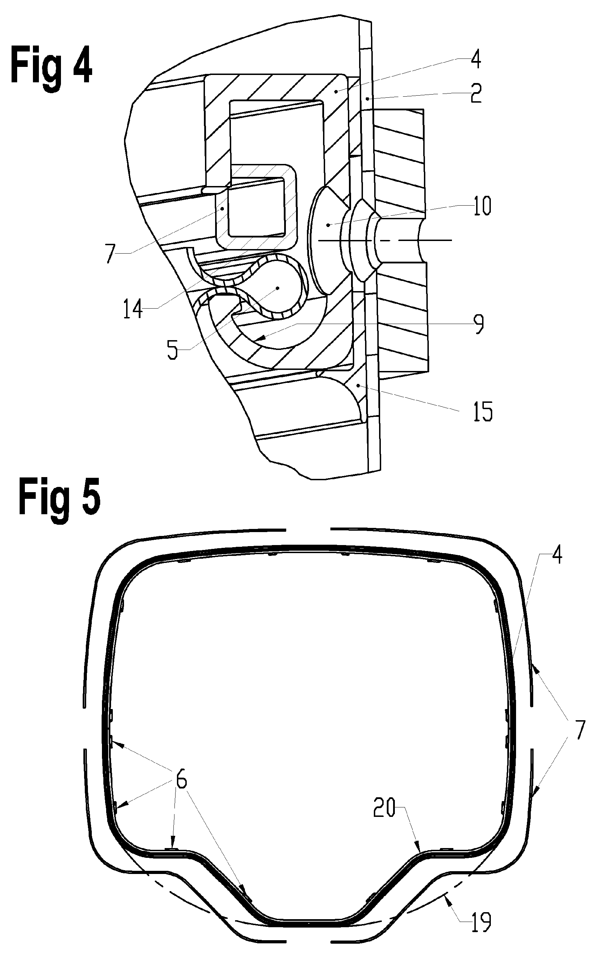

Wie die Figuren 2 und 4 zeigen, besitzt der Befestigungsrahmen 4 dabei einen vorzugsweise J-förmigen Querschnitt mit einer Aufnahme 9, welcher dem Klemmen des Endabschnittes 5 des Faltenbalgs 3 dient. Dabei weist das Querschnittsprofil des Befestigungsrahmens 4 einen Abschnitt auf, der unmittelbar an der Stirnfläche 2 entlang dieser verläuft, einen Abschnitt der in einem Abstand parallel zur Stirnfläche 2 verläuft und einen, der im wesentlichen senkrecht von der Stirnfläche 2 absteht, wobei letzterer rinnenförmig gebördelt ist und entlang einer geschlossenen Befestigungsrahmenumfangskontur die Aufnahme 9 bildet. Der Faltenbalg 3 seinerseits besitzt an seinem Endabschnitt 5 einen umlaufenden elastischen Klemmwulst 5, welcher bei entsprechender Größendimensionierung durch eine umlaufende Öffnung 8, gebildet vom senkrecht von der Stirnfläche abstehenden Abschnitt des Befestigungsrahmens und dem in einem Abstand zur Stirnfläche 2 parallel dazu verlaufenden Abschnitt des Befestigungsrahmens 4 in diesen hineingeführt werden kann und in der Aufnahme 9 seinen Platz findet.

Am Befestigungsrahmen 4 sind mindestens zwei Druckelemente 7 und mehrere Spannhebel 6 angeordnet, wobei durch Betätigung der Spannhebel 6 das dem jeweiligen Spannhebel zugeordnete Druckelement 7 im Befestigungsrahmen 4 parallel zur Stirnfläche 2 so weit verschoben wird, dass sich die Öffnung 8 verkleinert und der Klemmwulst 5 des Faltenbalges 3 in der Aufnahme 9 fixiert wird (siehe Pfeil 16 in Fig.2).

Fig.5 zeigt beispielhaft mehrere nebeneinander angeordnete Druckelemente 7. Alle Druckelemente 7 gemeinsam ergeben, von geringfügigen Unterbrechungen abgesehen, die Umfangskontur des Befestigungsrahmens 4. Jedes Druckelement 7 bzw. dessen Anpressfläche 14 weist eine längliche Form auf, die in der axialen Erstreckung jeweils der Umfangskontur des Befestigungsrahmens 4 am Fahrzeugglied 1 in jenem Abschnitt entspricht, in welchem es angeordnet ist. Somit ist die Form der Druckelemente 7 im wesentlichen kongruent zum Verlauf des Befestigungsrahmens 4. Dadurch können die Druckelemente 7 in den Befestigungsrahmen bzw. in dessen J-Profil lose eingelegt werden.

Die Länge der Druckelemente 7 ist frei wählbar. Soll der gesamte Umfang des Befestigungsrahmens abgedeckt werden, ist mit geringerer Länge der Druckelemente 7 eine größerer Anzahl derselben erforderlich um eine lückenlose Klemmung des Klemmwulstes 5 zu ermöglichen.

Eine weitere möglich Ausführungsvariante sieht vor, lediglich einige wenige Druckelemente 7 einzusetzen, die jedoch aufgrund ihrer geringen Länge nicht in der Lage sind, eine lückenlose Klemmung des Klemmwulstes 5 zu bewerkstelligen. Denkbar hier sind beispielsweise Druckelemente 7 die eine quadratische Anpressfläche aufweisen, somit lediglich eine punktuelle Klemmung ermöglichen.

Die Lagefixierung der Druckelemente 7 im Befestigungsrahmen 4 erfolgt beispielsweise durch die Druckelemente 7 selbst. Durch die Formgebung der Druckelemente 7 entsprechend der Umfangskontur des Befestigungsrahmens 4 ist das Verrutschen der Druckelemente 7 im Befestigungsrahmen praktisch ausgeschlossen.

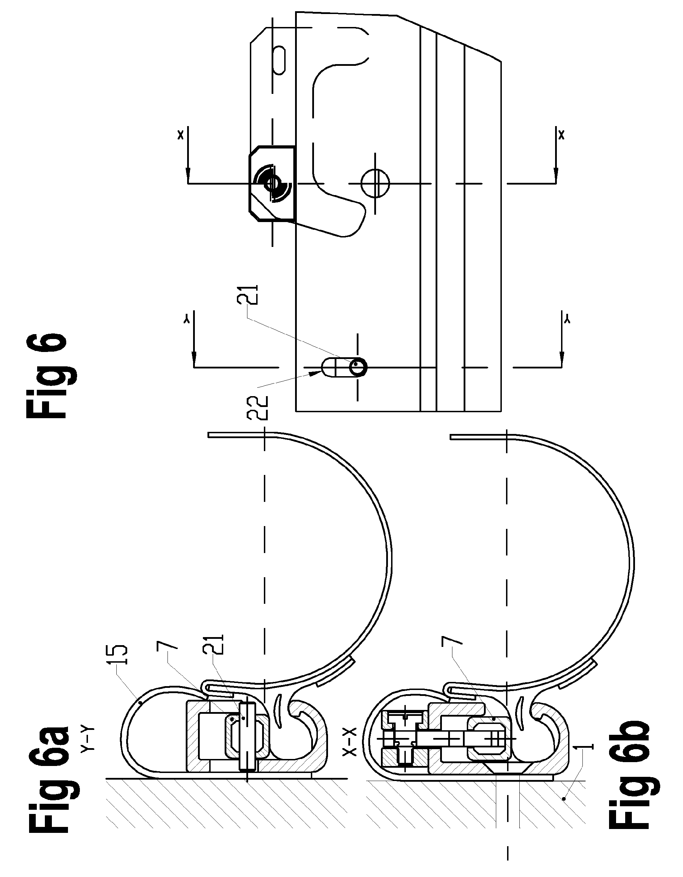

In einer bevorzugten Ausführungsvariante sind jedoch mit dem Befestigungsrahmen 4 verbundene Passstifte 21 vorgesehen, welche in einem Langloch 22 im Befestigungsrahmen 4 und zwar in dessen Abschnitt, der in einem Abstand parallel zur Stirnfläche 2 verläuft und dessen Abschnitt, der unmittelbar an der Stirnfläche 2 entlang dieser verläuft, geführt werden (siehe Fig.6 und 6a).

War bei bisherigen Befestigungsvorrichtungen mittels eines Spannseils nur ein konvexer Krümmungsverlauf 19 des Befestigungsrahmens 4 zulässig, so sind durch die erfindungsgemäße Befestigungsvorrichtung nun auch beliebig wechselnde konkave und konvexe Krümmungsverläufe 20 möglich.

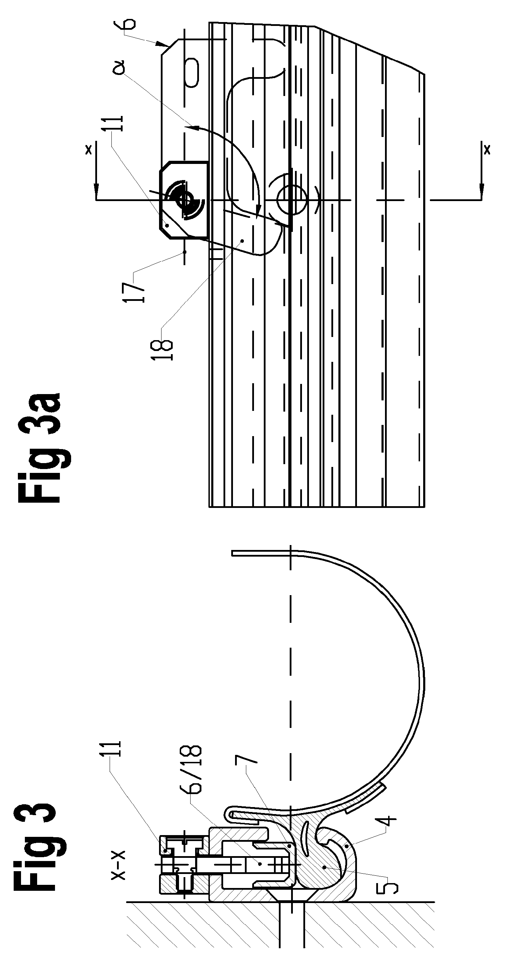

Der Vorgang einer Klemmung des Klemmwulstes 5 im Befestigungsrahmen 4 bei Betätigung des Spannhebels 6 ist anhand der Figuren 2 und 3 nachzuvollziehen. Dabei zeigt Fig.2 und 2a den Faltenbalg 3 im gelösten, vom Befestigungsrahmen 4 separierten Zustand, während Fig. 3 und 3a den Faltenbalg 3 im fixierten, am Befestigungsrahmen 4 geklemmten Zustand bei Eingreifen des Spannhebels 6 samt Druckelementes 7 darstellt.

Durch Aktivieren der Spannmittel 6 werden die Druckelemente 7 parallel zur Stirnfläche 2 in Richtung Aufnahme 9 verschoben und pressen so den Klemmwulst 5 in die Aufnahme 9. Durch diese Anordnung wird das Anpressen der Druckelemente 7 an die Innenseite des Befestigungsrahmenprofils, genauer in die Aufnahme, über den gesamten Umfang des Befestigungsrahmens 4 bzw. der Aufnahme 9 erreicht.

In weiteren, nicht dargestellten Ausführungsformen kann die Anpressrichtung des Druckelementes 7 auch in anderer Richtung erfolgen, beispielsweise in einer Normalebene oder einem beliebigen Winkel zur Stirnfläche 2 bei entsprechend adaptierter Anordnung der Aufnahmeöffnung 8 des Befestigungsrahmens 4 und des Klemmwulstes 5.

Auch können andere Vorrichtung zum Anpressen des Klemmwulstes 5 in die Aufnahme vorgesehen werden, wie beispielsweise einfache Schrauben oder aber auch eine Vakuumpumpe, die durch Herstellung eines Unterdrucks den Klemmwulst 5 in die Aufnahme 9 drückt bzw. saugt.

Der bevorzugt U-förmig ausgeführte Spannhebel 6 wird an zwei am Befestigungsrahmen 4 angebrachten Lagerböcken 11 mittels einer Spannhebelschraube 12 drehbar gelagert. Entlang des in Fig.5 dargestellten Befestigungsrahmens 4 wurden rein beispielhaft 16 Spannhebel vorgesehen. Auch deren Anzahl kann natürlich entsprechend den Konstruktionserfordernissen variieren. Wie aus den Fig. 2a und 3a ersichtlich, ist der das Druckelement 7 klemmende Spannhebelschenkel 18 in einem stumpfen Winkel α zur Spannhebellängsachse 17 angeordnet. Auf diese Weise kommt der Spannhebelschenkel 18 in seiner klemmenden Position in einer Endstellung zum Liegen, in welcher ein eventuelles Zurückklappen in die gelöste Stellung verhindert ist.

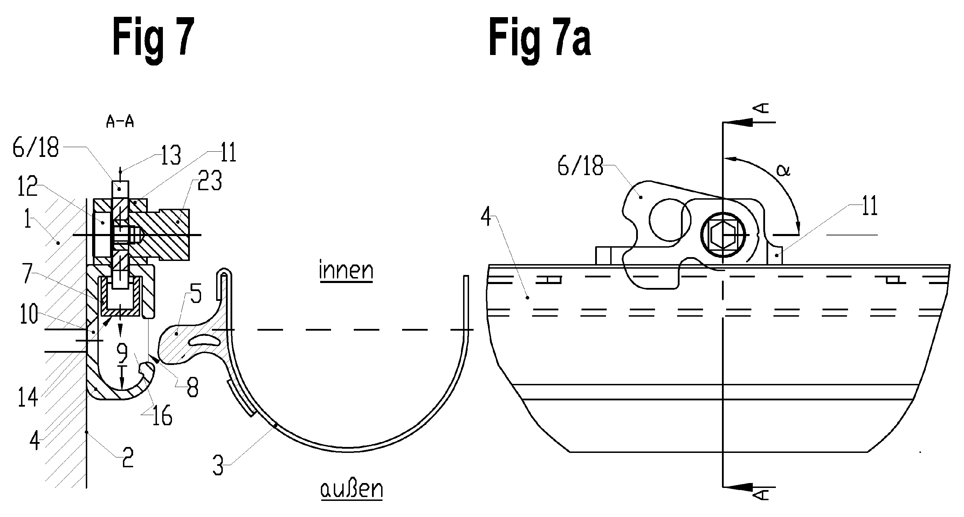

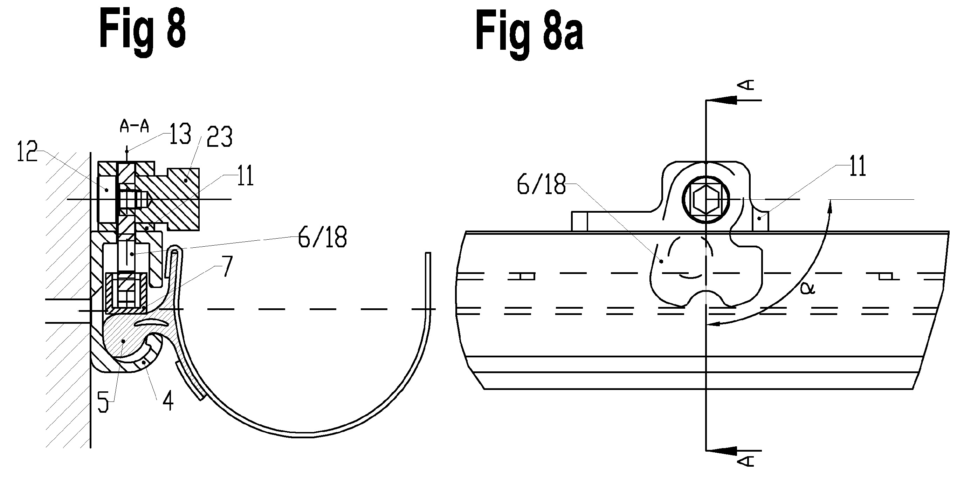

Eine weitere Ausführungsvariante des Spannhebels 6 wird in den Figuren 7 bzw. 7a sowie 8 bzw. 8a gezeigt. Hier ist der Spannhebel 6 zwecks besserer Handhabung als einarmiger Hebel ausgeführt, welcher nunmehr keinen sich entlang der Spannhebellängsachse 17 erstreckenden Hebelarm so wie in den Figuren 2a, 3a bzw. 6a gezeigt, sondern lediglich einen um die Spannhebelschraube 12 drehbaren Spannhebelschenkel 18 besitzt. Dieser Spannhebel 6/18 ist im Bereich des von der Spannhebelschraube 12 ausgebildeten Drehlagers mit einem Ansatzelement 23, vorzugsweise einem Sechskantschaft versehen, an welchem ein der Profilform des Ansatzelements 23 entsprechendes Werkzeug angesetzt werden kann, mittels welchem der Spannhebel 6/18 betätigbar ist.

Das Ansatzelement 23 kann hinsichtlich seiner rotationssymmetrischen Achse exakt fluchtend mit der Achse des von der Spannhebelschraube 12 ausgebildeten Drehlagers bzw. einer mit der Spannhebelschraube 12 korrespondierenden Nabe innerhalb der Lagerböcke 11 angeordnet sein, oder auch mehr oder weniger exzentrisch dazu.

Das Ansatzelement 23 kann darüber hinaus beliebig profiliert sein, beispielsweise auch in Form eines Vierkantschafts, einer angeschweißten Schraubenmutter oder gegebenenfalls einer Imbus-Ausnehmung. Im Ausführungsbeispiel gemäß Fig. 7 bzw.

Fig.8 handelt es sich beim Ansatzelement 23 um ein separates Bauteil in Form eines Sechskantschafts mit Schlüsselweite 17, welches in eine Aufnahme des Lagerbocks 11 eingeführt und mittels der von der gegenüberliegenden Seite des Lagerbocks 11 eingeführten Spannhebelschraube 12 fest mit dem Spannhebel 6/18 verschraubt ist. Solcherart kann der Benutzer den Spannhebel 6/18 mit einem einfachen handelsüblichen Werkzeug, beispielsweise einem entsprechend langen Gabelschlüssel oder einem Steckschlüssel betätigen.

Das Anpressen der Druckelemente 7 an die Innenseite des Befestigungsrahmenprofils erfolgt auf die gleiche Weise wie bereits oben zu den Figuren 2 und 3 beschrieben, indem die Druckelemente 7 mittels des Spannhebels 6/18 parallel zur Stirnfläche 2 des Fahrzeuggliedes 1 in Richtung Aufnahme 9 verschoben werden, sodass der Klemmwulst 5 in die Aufnahme 9 gepresst wird.

Die Vorsehung des Ansatzelementes 23 ermöglicht zum einen eine sehr leichte Betätigung des Spannhebels 6/18, zumal die Länge des angesetzten Werkzeugs und damit die aufgebrachte Kraftwirkung vom Benutzer beliebig ausgewählt werden kann, zum anderen beansprucht die Befestigungsvorrichtung nun weitaus weniger Platz als jene in den Figuren 2a, 3a bzw. 6a gezeigten Ausführungen.

Zur Befestigung des Ansatzelementes 23 am Spannhebel 6/18 können verschiedenste Techniken wie etwa Schweißen, Schrauben, Nieten oder Einpressen Einsatz finden.

Die Druckelemente 7 werden vorzugsweise als U-Profil (siehe Fig.3) oder als Hohlprofil (siehe Fig.6b) ausgeführt.

Im abgebildeten Beispiel wurde ein unterbrechungsfrei umlaufender Faltenbalg 3 dargestellt. Ebenso denkbar ist eine Variante, bei welcher der Faltenbalg 3 samt Befestigungsrahmen 4 mit zwei Endbereichen bündig an einer Übergangsbrücke, über welche die Fahrgäste das Fahrzeugabteil wechseln, anschließt und gemeinsam mit dieser den Übergangsraum umhüllt.

## Patentansprüche

1. Vorrichtung zur Befestigung eines Faltenbalgs (3) an einem Fahrzeugglied (1), vorzugsweise an der Stirnfläche (2) eines Fahrzeugglieds, insbesondere eines Schienenfahrzeugs, wobei ein Endabschnitt (5) des Faltenbalgs (3) an einem vorzugsweise in Faltenbalgumfangsrichtung verlaufenden, am Fahrzeugglied (1) angeordneten Befestigungsrahmen (4) in einer Aufnahme (9) gehalten ist, an welcher ein Haltemittel (7) angreift und den Endabschnitt (5) des Faltenbalgs (3) in der Aufnahme (9) hält, **dadurch gekennzeichnet, dass** das Haltemittel (7) mindestens zwei Druckelemente (7) sind, die in unterschiedlichen Abschnitten der Aufnahme angeordnet sind und über Spannmittel (6) in die Aufnahme (9) drückbar sind.

2. Vorrichtung zur Befestigung eines Faltenbalgs (3) nach Anspruch 1, **dadurch gekennzeichnet, dass** das Druckelement (7) ein länglicher Formkörper ist, dessen Kontur entlang seiner Längsachse zumindest einem Abschnitt der Umfangskontur des Befestigungsrahmens (4) entspricht.

3. Vorrichtung zur Befestigung eines Faltenbalgs (3) nach einem der Ansprüche 1 oder 2, **dadurch gekennzeichnet, dass** der Befestigungsrahmen (4) einen am Fahrzeugglied (1) befestigten Abschnitt aufweist, sowie einen davon in Richtung des Faltenbalgs (3) abstehenden, die Aufnahme (9) bildenden Abschnitt.

4. Vorrichtung zur Befestigung eines Faltenbalgs (3) nach einem der Ansprüche 1 bis 3, **dadurch gekennzeichnet, dass** jedes Druckelement (7) eine Anpressfläche (14) zum Anpressen des Endabschnittes (5) des Faltenbalgs (3) in die Aufnahme (9) aufweist, deren Erstreckung in Umfangsrichtung der Aufnahme (9) identisch ist mit jener der Aufnahme (9).

5. Vorrichtung zur Befestigung eines Faltenbalgs (3) nach einem der Ansprüche 1 bis 4, **dadurch gekennzeichnet, dass** die Anpressrichtung der Druckelemente (7) parallel zur Stirnfläche (2) in einer Ebene im wesentlichen normal zur Achse des vom Faltenbalg (3) umgrenzten Raumes verläuft.

6. Vorrichtung zur Befestigung eines Faltenbalgs (3) nach einem der Ansprüche 1 bis 5, **dadurch gekennzeichnet, dass** die Spannmittel Spannhebel (6) sind, die vorzugsweise am Befestigungsrahmen (4) angeordnet sind.

7. Vorrichtung zur Befestigung eines Faltenbalgs (3) nach einem der Ansprüche 1 bis 6, **dadurch gekennzeichnet, dass** der Befestigungsrahmen (4) ein J-förmiges Querschnittsprofil aufweist.

8. Vorrichtung zur Befestigung eines Faltenbalgs (3) nach einem der Ansprüche 1 bis 7, **dadurch gekennzeichnet, dass** der Endabschnitt (5) des Faltenbalgs (3) einen umlaufenden Klemmwulst aufweist.

9. Vorrichtung zur Befestigung eines Faltenbalgs (3) nach einem der Ansprüche 1 bis 8, **dadurch gekennzeichnet, dass** zwischen dem Befestigungsrahmen (4) und der Fahrzeugstirnwand (2) eine Dichtmasse oder ein Dichtprofil (15) eingefügt ist.

10. Vorrichtung zur Befestigung eines Faltenbalgs (3) nach einem der Ansprüche 6 bis 9, **dadurch gekennzeichnet, dass** der Spannhebel (6) an zwei am Befestigungsrahmen (4) angebrachten Lagerböcken (11) mittels einer Spannhebelschraube (12) drehbar gelagert ist.

11. Vorrichtung zur Befestigung eines Faltenbalgs (3) nach einem der Ansprüche 1 bis 10, **dadurch gekennzeichnet, dass** der Befestigungsrahmen (4) auf seiner zur Stirnfläche (2) des Fahrzeuggliedes (1) weisenden Seite Senkungen (10) aufweist.

12. Vorrichtung zur Befestigung eines Faltenbalgs (3) nach einem der Ansprüche 6 bis 11, **dadurch gekennzeichnet, dass** der Spannhebel (6) U-förmig ausgebildet ist.

13. Vorrichtung zur Befestigung eines Faltenbalgs (3) nach einem der Ansprüche 6 bis 11, **dadurch gekennzeichnet, dass** der Spannhebel (6) als einarmiger Hebel ausgeführt ist, welcher im Bereich seines Drehlagers mit einem Ansatzelement (23), vorzugsweise in Form eines Sechskantschafts versehen ist, an welchem ein entsprechendes Werkzeug zur Betätigung des Spannhebels (6) ansetzbar ist.

14. Vorrichtung zur Befestigung eines Faltenbalgs (3) nach einem der Ansprüche 1 bis 13, **dadurch gekennzeichnet, dass** das Druckelement (7) in seinem Querschnitt als Hohlprofil ausgeführt ist.

15. Vorrichtung zur Befestigung eines Faltenbalgs (3) nach einem der Ansprüche 1 bis 13, **dadurch gekennzeichnet, dass** das Druckelement (7) in seinem Querschnitt als U-Profil ausgeführt ist.
